# EUROPÄISCHE PATENTANMELDUNG

(11) **EP 1 962 126 A2**
(43) Veröffentlichungstag der Anmeldung: **27.08.2008**
(21) Anmeldenummer: 08003642.9
(22) Anmeldetag: 14.05.2004
(51) Int. Cl.: G02C 5/22, G02C 1/08

(54) **Brille**

(30) Priorität: 31.12.2003 DE 10361797
(62) Teilanmeldung aus: 04011495.1
(71) Anmelder: Temming, Markus, 33334 Gütersloh (DE)
(72) Erfinder: Temming, Markus, 33334 Gütersloh (DE)
(74) Vertreter: Rolf, Gudrun

(57) **Zusammenfassung**

Es wird eine neuartige Brille aus einem BriHengestell (1-6) mit einer Halterung für die Brillengläser (30) und mit einer Nasenaufilagerung sowie mit über Scharniere angelenkten Brillenbügeln (13) zur Verfügung gestellt, die einfach aufgebaut und kostengünstig herzustellen ist, was dadurch erreicht wird, dass das Brillengestell (1) aus einem beide Gläser (30) zumindest teilweise von oben umschließenden oberen Fassungsteil (32) und einen beide Gläser zumindest teilweise von unten umschließenden unteren Fassungsteil (33) besteht, die jeweils dazwischen angeordnete und voneinander mindestens geringfügig beabstandete Verbindungsstege (34;35) aufweisen, die beide zur Befestigung eines Glases (30) von einem Klemmbügel(36;37;38) gegeneinander gespannt gehalten sind.

## Beschreibung

Die Erfindung betrifft eine Brille gemäß dem Oberbegriff des Hauptanspruches.

Brillen sind in vielerlei technischer wie optischer Ausgestaltung bekannt und weisen zum Teil einen recht komplexen Aufbau auf, wie etwa eine Verspannung der Gläser mittels über Schrauben geklemmten Glaseinfassungen oder aufwändigen Scharnier oder Gestellkonstruktionen, was die Herstellung solcher Brillen deutlich verkompliziert und verteuert.

Aufgabe der Erfindung ist es, eine neuartige Brille zur Verfügung zu stellen, die einfach aufgebaut und kostengünstig herzustellen ist. Insbesondere soll sie eine vereinfachte Glasbefestigung sowie ein einfaches Brillengestell aufweisen. Weiterhin sollen die Glasbefestigung und das Brillengestell möglichst wirtschaftlich herzustellen sein.

Die erfindungsgemäße Lösung dieser Aufgabe ergibt sich aus den Merkmalen des kennzeichnenden Teils des Hauptanspruches.

Ein besonders bevorzugter Lösungsweg zur Verfügungstellung einer einfach aufgebauten und kostengünstig herzustellenden Brille besteht in der Ausführungsform des Brillengestells aus einem beide Gläser zumindest teilweise von oben umschließenden oberen Fassungsteil und einem beide Gläser zumindest teilweise von unten umschließenden unteren Führungsteil, die jeweils dazwischen angeordnete und voneinander mindestens geringfügig beabstandete Verbindungsstege aufweisen, die beide zur Befestigung eines Glases mindestens von einem Klemmbügel gegeneinander verspannt gehalten sind. Dies ermöglicht ein Festsetzen von Gläsern ohne die Verwendung von Schrauben oder die Ränder der Gläser umspannende Fäden, sodass die Gläser ohne Verwendung von Werkzeugen in kürzester Zeit in ein Brillengestell eingesetzt und dort durch einfaches Aufklemmen der Klemmbügel befestigt werden können.

Dadurch, dass die Verbindungsstege geringfügig voneinander beabstandet sind, bildet sich in der Ansicht eines Brillengestells von vorne ein quer verlaufender Spalt, der bei einer besonderen Ausführungsform auch etwa mittig durch einen Koppelsteg geschlossen sein kann, wobei sich durch den Spalt mit oder ohne den Koppelsteg ein neues und eigentümliches Aussehen der Brille einstellt.

Die Klemmbügel sind vorteilhafterweise unmittelbar benachbart eines jeden Glases um die Verbindungsstege herum verspannt, wobei der Klemmbügel dort eine Klemme bildet und die beiden rechts- und linksseitigen Klemmen über einen Verbindungsbügel miteinander verbunden sind, der insbesondere bei einem aus einer dünnen ebenen Platte gefertigten Brillengestell zu dessen Versteifung beiträgt.

Die Nasenauflagerung der Brille kann vorteilhafterweise entsprechend dem Wunsch eines Designers ausgebildet sein, nämlich entweder durch die Ausgestaltung des unteren Fassungsteils als Bogen oder aber durch beidseitig am Klemmbügel angeordnete Fortsätze für Nasenauflagerflächen oder aber auch durch eine bogenförmige Ausgestaltung des Verbindungsbügels.

Zur Montage dieser erfindungsgemäßen Glasbefestigung wird keinerlei Werkzeug benötigt, ebenso wenig wie für die Fertigung der Glasbefestigung eine aufwändige Maschinentechnik bereitgehalten werden muss.

Als Material für einen solchen erfinderischen Klemmbügel bietet sich ein Metalldraht, insbesondere aus Titan an, sodass in Verbindung mit Brillen-bügeln aus Titandraht ein homogenes Gesamtbild erzeugt wird und die gesamte Brille extrem leicht gestaltet werden kann, was deren Tragekomfort gegenüber anderen bekannten Brillen deutlich vergrößert.

Eine weitere Lösungsvariante der Aufgabe zur Herstellung einer einfach aufgebauten und kostengünstig herzustellenden Brille wird vorteilhafterweise dadurch gelöst, dass die Kontur des Brillengestells inklusive der Glasaufnahmen aus einer ebenen Platte ausgeformt ist, etwa gesägt, gestanzt oder geschnitten, wobei diese Platte bevorzugt über ihre gesamte Größe die gleiche Wandstärke aufweist. Ein solches Brillengestell lässt sich äußerst einfach und extrem kostengünstig erzeugen und kann quasi aus jedem beliebigen Voll- oder Schichtmaterial oder Materialkombinationen hergestellt werden, sei es Holz, Metall oder Kunststoff und auch die Dicke des Brillengestells lässt sich frei wählen und sich bis auf wenige zehntel Millimeter oder auch darunter reduzieren. Abhängig von der Stückzahl können natürlich auch andere großindustrielle Herstellungsverfahren wie der Kunststoffspritzguss zur Erzeugung der Brillengestelle eingesetzte werden.

Allen vorgenannten Ausführungsformen ist es gemein, dass der Endbereich eines Bügels mindestens eine gemeinsame Auflagerfläche mit der Vorderseite des Brillengestells aufweist, welches somit einen Teil des Scharniers bildet. Dies gilt auch für eine Ausführungsform mit einem Scharnierblock, wobei der Endbereich eines Brillenbügels länger ausgeführt ist als das Maß der Höhe eines Blocks beträgt, sodass die aus dem Block hervorragenden Abschnitte zumindest eine Linienberührung mit dem Brillengestell oder, für den Fall, dass das Bügelgelenk in einem Glas eingesetzt ist, mit dem Glas aufweist, wie das bei den übrigen angeführten Endbereichen der Brillenbügel ebenfalls der Fall ist.

Einen besonders wesentlichen Beitrag zur Vereinfachung der Herstellung einer kostengünstigen Brille liefert die neuartige Konstruktion des Bügelscharniers, welche Brillenbügel erfordert, die mindestens in ihren Endbereichen kreis-zylindrische Querschnitte aufweisen, vorteilhafterweise aber vollständig aus dünnem Draht, etwa aus Titan, bestehen. Dieser ist in seinem Endbereich in eine zur Ebene des Brillenglases bzw. des Brillengestells parallel etwa vertikal nach unten oder oben umgebogen und durchtritt die Ebene des Brillengestells von hinten nach vorne, sei es seitlich um die Gläser oder das Brillengestell herum oder von unten oder von oben oder durch eine Ausnehmung im Brillengestell oder in einem Glas. In der Brille sind weitere Ausnehmungen für die Scharnierbauteile vorgesehen, die Aufnahmeöffnungen für die umgebogenen Endbereiche der beiden Brillenbügel aufweisen oder erzeugen. Die Endbereiche der Brillenbügel sind so in diese Aufnahmeöffnungen eingeführt und die Scharnierbauteile von vorne nach hinten in die Ausnehmungen der Brille so eingesetzt, dass eine formschlüssige Verriegelung in eine zu erwartende Hauptzugrichtung eines Brillenbügels nach hinten erzeugt ist, da Abschnitte des freien Endbereichs auf der Vorderseite des Brillengestelles aufliegen.

Dieser Grundgedanke eines neuen Bügelgelenkes ermöglicht Ausgestaltungen der Erfindung in einer nahezu unbegrenzten Anzahl, wobei eine besonders bevorzugte Ausführungsform Scharnierbauteile aufweist, die zumindest in Teilbereichen geringfügig elastisch ausgebildet sind und zumindest während der Montage elastisch so verformt werden können, dass sie danach form- und/ oder kraftschlüssig in den Ausnehmungen festgelegt sind. Auf eine Fixierung mittels Schrauben oder etwa über Klebstoffe kann somit gänzlich verzichtet werden. Dieses einfache Zusammenstecken vorgefertigter Teile erfordert keine aufwändigen Werkzeugmaschinen oder hoch qualifiziertes Personal, sodass eine sehr wirtschaftliche Fertigung dieser einfachst aufgebauten Brillen ermöglicht ist.

Um einen festen spielfreien und definierten Sitz eines solchen Scharnierbauteiles zu gewährleisten, kann dieses seitliche Randausnehmungen aufweisen, die dem Maß der Wanddicke das Brillengestells entsprechen, sodass ein formschlüssiger Sitz des Scharnierbauteiles im Brillengestell gewährleistet werden kann.

Ein besonders bevorzugtes Scharnierbauteil weist die Form eines kleinen Blockes auf, der als Aufnahmeöffnung für das Ende eines Brillenbügels eine etwa senkrecht verlaufende Bohrung besitzt und eine sich von der Bohrung radial nach hinten erstreckende Schlitzausnehmung, sodass sich der hintere Bereich des Blockes zur Montage in ein Brillengestell leicht zusammendrücken lässt, der nach der Montage seine ursprüngliche Form wieder einnimmt und so den Block in der Ausnehmung klemmt. Um die Reibwerte des Bügelgelenkes vorherbestimmen zu können, kann in der Aufnahme des Blockes eine Kunststoffhülse mit einer Innenbohrung für den End-bereich des Brillenbügels vorgesehen sein.

Um den etwa rechtwinklig umgebogene Endbereich eines Brillenbügels in die Aufnahme eines Scharnierbauteils einführen zu können, weist eine vorteilhafte Ausführungsform des Brillengestells eine weitere Ausnehmung auf, die der Endbereich des Brillenbügels von hinten nach vorne durchtritt, wobei diese weitere Ausnehmung vorteilhafterweise die Form eines etwa horizontal verlaufenden Langloches aufweist und die Endbereiche des Langloches so platziert sind, dass sie die Bewegungsbegrenzung für den möglichen Schwenkwinkel des Brillenbügels bilden. Eine solche Konstruktion hat den Vorteil, dass nach deren Zusammenbau quasi eine formschlüssige Ausrutschsicherung des Endbereiches des Brillenbügels aus der Ausnehmung des Scharnierbauteils gewährleistet ist, ohne dazu komplizierte mechanische Vorkehrungen treffen zu müssen, da die dem Scharnierbauteil abgewandte Seite der weiteren Ausnehmung eine entsprechende Funktionsfläche bildet.

Hierbei ist es wahlfrei, die weitere Ausnehmung oberhalb oder unterhalb der Ausnehmung für die Scharnierbauteile anzuordnen, da diese beschriebene Funktion stets gewährleistet bleibt.

Besonders vorteilhaft ist auch die Möglichkeit, die angesprochenen Ausnehmungen nicht unbedingt im Brillengestell selbst vorsehen zu müssen, sondern diese auch in den Seitenbereich eines Glases einbringen zu können. Dies ermöglicht nicht nur einen besonders einfachen Grundaufbau der zur Verfügung gestellten Brille, sondern erlaubt auch ein hohes Maß an Variationsmöglichkeiten in der Gestaltung einer solchen Brille.

Entsprechend einer weiteren vorteilhaften Ausführungsform der Brille weist diese benachbart der Ausnehmung für das Scharnierbauteil gegenüber der weiteren Ausnehmung eine zusätzliche Ausnehmung auf, in die sich ein nochmals um etwa 90 Grad zurück umgebogenes Endstück des Endbereichs des Brillenbügels erstreckt, welches in diese zusätzliche Ausnehmung eingreift oder diese auch vollständig durchgreift. In letzterem Fall könnte der Brillenbügel auch so lang ausgeführt sein, dass quasi ein doppelter Brillenbügel gebildet wird, der möglicherweise optischen Zwecken dienen kann, oder aber die Stabilität des ersten Brillenbügels vergrößert.

Andere vorteilhafte Konstruktionen können so ausgeführt sein, dass der Endbereich eines Brillenbügels zwar die Ebene eines Brillengestells durchtritt, ohne jedoch das Brillengestell oder ein Glas selber zu durchgreifen, nämlich in dem die Seitenbereiche des Brillengestells oder der Gläser von diesem oben, unten oder seitlich umgriffen wird und er vor der Ebene des Brillengestells in das Scharnierbauteil eingreift.

Eine andere, besonders einfache und kostengünstige Ausführungsform eines Scharnierbauteils besteht aus einem etwa U-förmig gebogenen elastischen Flachmaterial wie etwa aus einem Federstahlblech, welches sich mit seinen freien Schenkeln in oder durch die Ausnehmung des Brillengestells erstreckt und die Aufnahmeöffnung für den Endbereich eines Brillenbügels von dem gebogenen Verbindungsschenkel gebildet wird. Zur Vermeidung von scharfen Körperkanten kann das Federstahlblech zusätzlich an seinen freien Schenkeln mit zueinander umgebogenen Laschen versehen sein, die sich gegenseitig abdecken oder aber die freien Schenkel können so geformt sein, dass sie sich entweder innerhalb der Ausnehmung im Brillengestell an deren Innenseiten abstützen oder unmittelbar hinter der Ausnehmung seitlich von hinten auf dem Brillengestell aufliegen.

Eine weitere vorteilhafte Ausführungsform des erfinderischen Scharnierbauteils ist als flacher, etwa U- oder V-förmiger Blech- oder Drahtbügel ausgebildet, dessen freien Schenkel von vorne in die Ausnehmung der Brille eingesetzt sind, wobei der Verbindungsschenkel und die Ansätze der Seitenschenkel wieder die Aufnahmeöffnung des Scharnierbauteils bilden. Um bei einer solchen Ausführungsform eine sichere Führung des Endbereiches eines Brillenbügels gewährleisten zu können, ist es hier von Vorteil, mindestens zwei solcher Blech- oder Drahtbügel als Scharnierbauteil zu verwenden.

Das so erzeugte Bügelgelenk kommt damit ohne andere Gelenkbauteile aus, welche an einem Brillengestell vorgesehen, etwa angelötet oder angeschraubt werden müssten, wie auch die gesamte Gelenkkonstruktion ohne die Verwendung von stoffschlüssigen Verbindungen oder Kleb- oder Schraubverbindungen auskommet.

Nachfolgend sind einige Ausführungsbeispiele der Erfindung anhand der Zeichnungen näher beschrieben. Es zeigen:
- Fig. 1 - 4: Ansichten verschiedener Brillenausführungen,

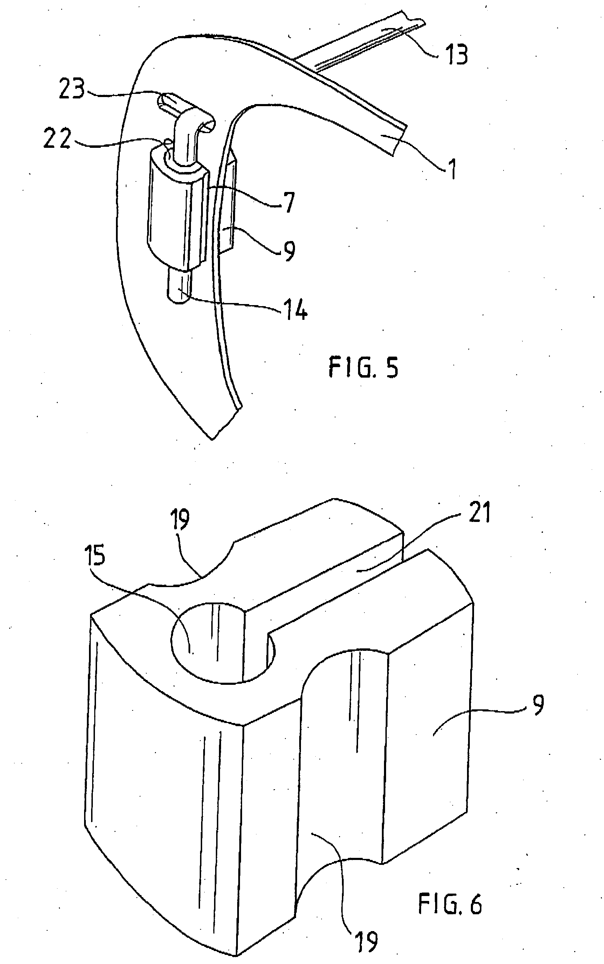

- Fig. 5: eine 3-D-Darstellung einer Brille in Teilansicht,
- Fig. 6: eine vergrößerte 3-D-Darstellung eines Scharnierbauteils,
- Fig. 7: eine 3-D-Darstellung einer weiteren Brille im Schnitt;
- Fig. 8: eine vergrößerte Darstellung eines Scharnierbauteils der Fig. 7,
- Fig. 9: eine 3-D-Darstellung einer weiteren Brille im Teilschnitt,
- Fig. 10, 11: Scharnierbauteile einer Brille gem. Fig. 9,
- Fig. 12: eine 3-D-Teilansicht der Glasbefestigung einer Brille,
- Fig. 13: einen Klemmbügel einer Glasbefestigung,
- Fig. 14: eine Klemme einer Glasbefestigung und
- Fig. 15: eine Teilansicht eines Brillengestells mit einem Verbindungssteg der Fassungsteile.
Die Brille besteht aus einem Brillengstell 1-6 gleicher Dicke, welches insbesondere aus einer dünnen ebenen Platte ausgeformt, etwa ausgesägt, ausgestanzt oder ausgeschnitten ist, letzteres wahlfrei mechanisch, per Licht oder per Wasserstrahl. Denkbar ist jedoch auch die Herstellung in einer Spritzgussform.

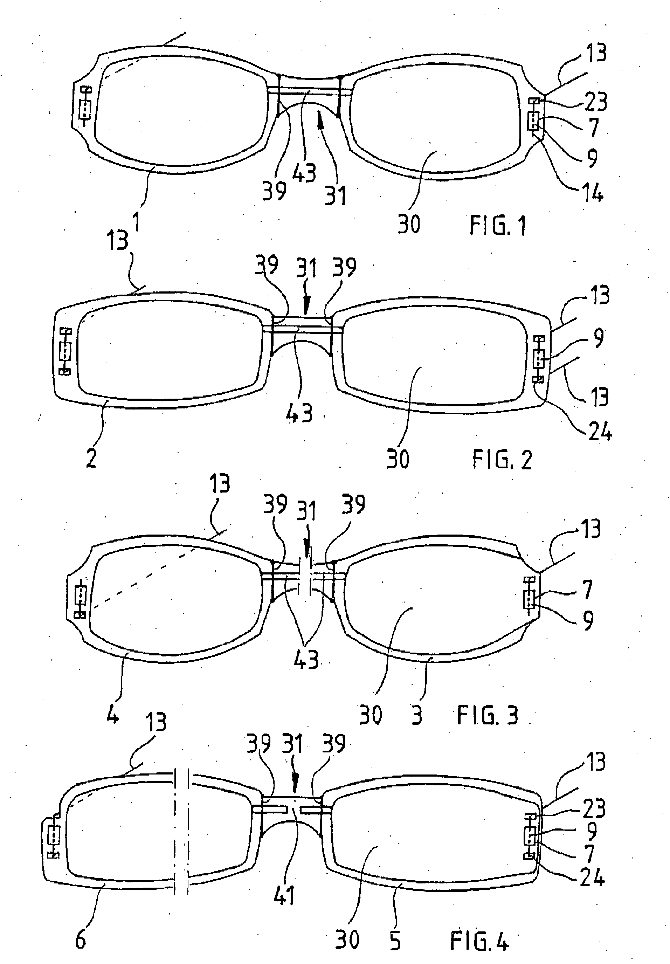

Bei einer Brille gemäß Fig. 1 weist das Brillengestell 1 einen oberen Verbindungssteg 34 und einen unteren Verbindungssteg 35 auf, die gemeinsam den Verbindungssteg 31 zwischen den beiden Gläsern 30 bilden und zwischen denen ein Spalt 43 aufrechterhalten ist, wobei um die beiden oberen und unteren Verbindungsstege 34:35 ein Klemmbügel 36 festgelegt ist, der die beiden Verbindungsstege 34;35 und damit die Fassung eines Glases 30, diese im Brillengestell 1-6 fixierend, gegeneinander verspannt.

Im seitlichen Bereich des Brillengestells 1 ist dieses mit einer ersten Ausnehmung 7 versehen, in die sich ein als Block ausgebildetes Scharnierbauteil 9 erstreckt welches eine senkrechte Aufnahmeöffnung 15 für den umgebogenen Endbereich 14 des Brillenbügels 13 aufweist sowie eine Schlitzausnehmung 21, die eine geringfügige Verformung des Scharnierbauteils 9 zum Einführen in die Ausnehmung 7.im Brillengestell 1 ermöglicht. Die dem Brillengestell 1 seitlich zugewandten Flächen des Scharnierbauteils 9 weisen Randausnehmungen 19 auf, in die sich nach Montage die Körperkanten der Ausnehmung 7 hinein erstrecken und das Scharnierbauteil 9 fixieren. Oberhalb der Ausnehmung 7 ist eine weitere Ausnehmung 23 in das Brillengestell 1 eingebracht, durch das sich der Endbereich 14 des Brillenbügels 13 hindurch erstreckt. Die Reihenfolge eines Zusammenbaus erfolgt so, dass zunächst der Brillenbügel 13 durch die weitere Ausnehmung 23 von hinten nach vorne hindurch geführt wird, sein Endbereich 14 in die Aufnahmeöffnung 15 des Scharnierbauteils 9 oder einer darin eingesetzten Kunststoffhülse 22 hinein bzw. hindurch durchgesteckt und anschließend das Scharnierbauteil 9 von vorne nach hinten in das Brillengestell eingesteckt wird. Der Endbereich 14 des Brillenbügels 13 durchtritt dabei das Scharnierbauteil 9 und weist mit dem Brillengestell 1 zusammen eine Linienberührung oberhalb und unterhalb des Scharnierbauteils 9 auf.

Bei Ausführungsformen, wie sie rechts in den Figuren 3 und 4 dargestellt sind, sind die Bügelgelenke nicht im Brillengestell 1, sondern jeweils in den Außenbereichen der Glaser 30 angeordnet.

Wie links in der Fig. 3 dargestellt ist, kann der Brillenbügel 13 auch durch eine weitere Ausnehmung 23 durch das Brillengestell 3 hindurch geführt sein, die unterhalb der Ausnehmung 7 für ein Scharnierbauteil 9-12 angeordnet ist.

Wie links in Fig. 4 dargestellt ist, muss ein Brillenbügel 13 nicht notwendigerweise die Ebene des Brillengestells 6 durch eine weitere Ausnehmung 23 hindurch durchgreifen, sondern kann auch, wie dort dargestellt, das Brillengestell 6 von oben übergreifen. Er könnte es jedoch auch, wie zeichnerisch nicht dargestellt, ein Brillengestell seitlich oder von oben oder unten umgreifend ausgeführt sein. Dabei ist nur darauf zu achten, dass Teilbereiche des Brillengestells weiterhin Bewegungsbegrenzungen und/ oder Funktionsflächen für die Brillenbügel bilden.

In den Fig. 2 und 4 sind weitere Varianten eines Bügelgelenkes dargestellt, die neben der Ausnehmung 7 für ein Scharnierbauteil 9 und der weiteren Ausnehmung 23 für den Brillenbügel 13 eine zusätzliche Ausnehmung 24 unterhalb der Ausnehmung 7 aufweisen und bei denen der Endbereich 14 eines Brillenbügels so ein weiteres mal etwa rechtwinklig nach hinten umgeformt sein kann, dass er sich in diese zusätzlich Ausnehmung 24 hindurch erstreckt, falls dies aus optischen oder technischen Gründen gewünscht ist. Denkbar, zeichnerisch aber nicht dargestellt, ist eine Ausführungsform des Bügelgelenkes, die zwei etwa zueinander parallele Brillenbügelabschnitte aufweist, wobei sich der erste Brillenbügelabschnitt durch eine weitere Ausnehmung 23 von hinten nach vorne erstreckt und nach einer zweiten etwa rechtwinkligen Umformung durch die zusätzliche Ausnehmung 24 von vorne nach hinten weitergeführt ist.

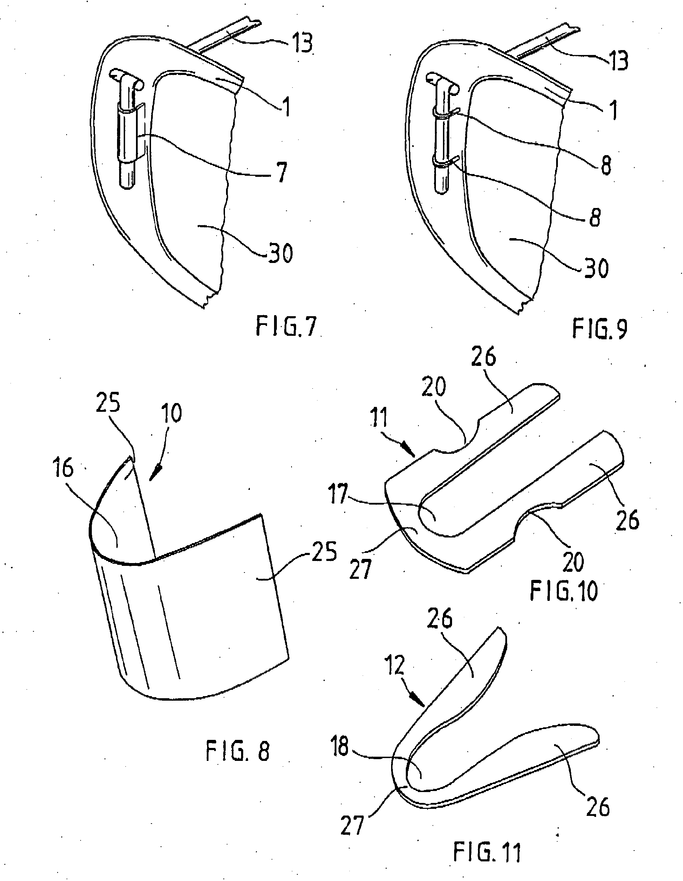

Eine weitere Variante des Bügelgelenkes ist in den Figuren 7 und 8 dargestellt, wobei die Fig. 8 ein vergrößertes Scharnierbauteil 10 zeigt, welches aus einem einfachen elastischen Materialstreifen, insbesondere aus einem Federstahlblechstreifen besteht, der um den Endbereich 14 eines Brillenbügels 13 herumgelegt und dessen freie Schenkel 25 zusammengepresst in die Ausnehmung 7 im Brillengestell 1 eingeführt wird, worauf seine beiden freien Schenkel 25 sich aufgrund der elastischen Kräfte versuchen aufzuspreizen, wodurch die Fixierung eines Endbereiches 14 eines Brillenbügels 13 in der von dem Materialstreifen gebildeten Aufnahmeöffnung des Scharnierbauteils 10 erfolgt.

Die Endbereiche der freien Schenkel 25 können auch andersartig ausgebildet sein, etwa parallel zur Rückwand des Brillengestells umgefaltet und sich gegenseitig überlagernd oder aber noch weiter spitzwinklig nach außen umgeformt sein, sodass sich eine noch bessere Verkeilung dieses Scharnierbauteils 10 im Brillengestell 1 einstellt.

In den Fig. 9 bis 11 ist eine weitere Variante eines Bügelgelenks dargestellt, die statt einer großen Ausnehmung 7 zwei Schlitzausnehmungen 8 aufweist, in die als geschlitzte Federscheiben ausgebildete Scharnierbauteile 11;12 eingesetzt sind, die jeweils freie Schenkel 26 aufweisen, sowie eine Aufnahmeöffnung 17;18 für den Endbereich 14 eines Brillenbügels 13 und die zusätzlich auch seitliche Randausnehmungen 20 besitzen können, um im Brillengestell 1 fixiert werden zu können.

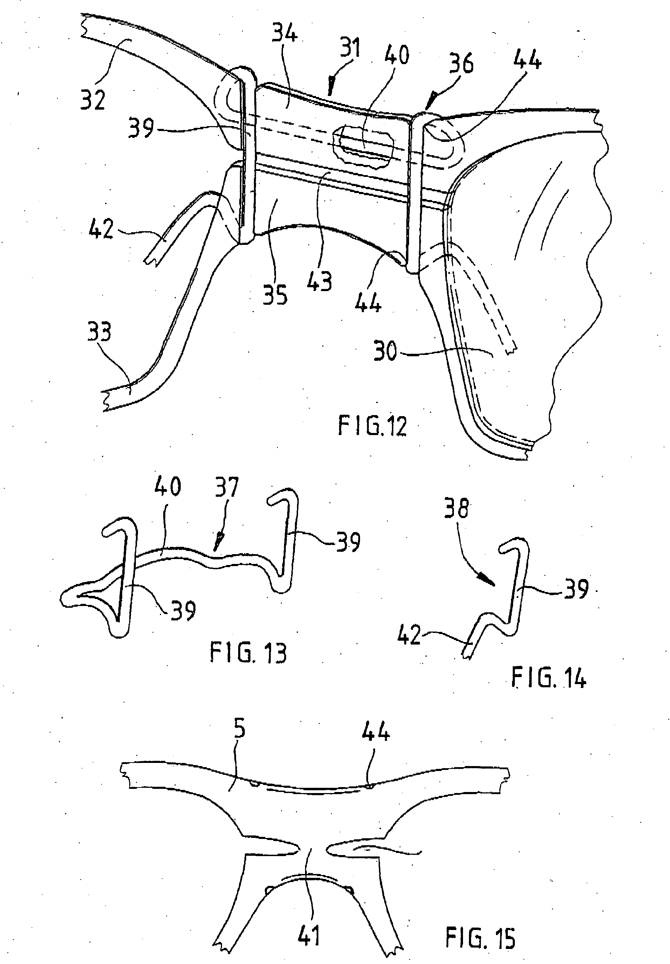

Die Fig. 12 zeigt ein als ebene dünne Platte ausgebildetes Brillengestell 1, wobei der Spalt 23 zwischen dem oberen Verbindungssteg 34 des oberen Fassungsteils 32 und dem unteren Verbindungssteg 35 des unteren Fassungsteils 33 von einem Klemmbügel 36 zusammgepresst wird, wodurch die beiden Brillengläser 30 im Brillengestell 1 verspannt werden.

Der Klemmbügel 36 ist symmetrisch aufgebaut und weist für jedes Glas 30 eine eigene Klammer 39 auf, die durch einen Verbindungsbügel 40 miteinander verbunden sind, der gleichzeitig als Stabilisierungsteil des sehr dünnen Brillengestells 1 fungiert. Weitere Varianten des Klemmbügels 36;37;38 sind in den Fig. 13 und 14 dargestellt. Der Klammer 39 können sich Fortsätze 42 anschließen, an dem die Nasenauflageflächen vorgesehen werden können.

Bei einer Ausführungsform gem. Fig. 13 kann der Verbindungsbügel 40 auch als Nasenauflagebügel ausgeführt sein.

Um die Stabilität eines Brillengestells 5 weiter zu vergrößern, kann der Spalt 43 mittels eines Koppelsteges 41 überbrückt sein. In dem Brillengestell 1-6 sind Aufnahmenuten 44 für die Klammern 39 vorgesehen, um einen definierten Sitz der Klemmbügel 36;37;38 bzw. von einzelnen separaten Klammern 39 zu gewährleisten. Diese können aus Runddraht oder Flachmaterial aus Metall oder Kunststoff bestehen oder auch aus einem Spannband oder einem verspannten Zugdraht, welches um den Verbindungssteg 31 gewunden und dessen Enden miteinander verbunden oder in dem Brillengestell 1-6 festgelegt sein können.

Die Brille verwirklicht ein sehr einfaches Stecksystem und eine sehr einfache Verglasung bei sehr geringen Fertigungskosten.

## Patentansprüche

1. Brille aus einem Brillengestell mit einer Halterung für die Brillengläser und mit einer. Nasenauflagerung sowie mit über Scharnieren angelenkten Brillenbügeln, **dadurch gekennzeichnet, dass** das Brillengestell (1) aus einem beide Gläser (30) zumindest teilweise von oben umschließenden oberen Fassungsteil (32) und einen beide Gläser zumindest teilweise von unten umschließenden unteren Fassungsteil (33) besteht, die jeweils dazwischen angeordnete und voneinander mindestens geringfügig beabstandete Verbindungsstege (34;35) aufweisen, die beide zur Befestigung eines Glases (30) von einem Klemmbügel (36;37;38) gegeneinander gespannt gehalten sind.

2. Brille nach Anspruch 1, **dadurch gekennzeichnet, dass** der Klemmbügel (36) unmittelbar benachbart jeden Glases (30) die Verbindungsstege (34; 35) mittels einer Klemme (39) verspannt und das beide Klemmen (39) über einen Verbindungsbügel (40) miteinander verbunden sind.

3. Brille nach Anspruch 2, **dadurch gekennzeichnet, dass** der Verbindungsbügel (40) als Stabilisierungsteil der Verbindungsstege (34;35) und damit der gesamten Brille ausgebildet ist.

4. Brille nach Anspruch 2, **dadurch gekennzeichnet, dass** der Verbindungsbügel (40) als Nasenauflagerung der Brille ausgebildet ist.

5. Brille nach einem der vorgenannten Ansprüche, **dadurch gekennzeichnet, dass** am Klemmbügel (36;37;38) Fortsätze (42) für die Nasenauflagerflächen angeordnet sind.

6. Brille nach einem der vorgenannten Ansprüche, **dadurch gekennzeichnet, dass** das obere und das untere Fassungsteil (32; 33) im Bereich ihrer Verbindungsstege (34; 35) über einen Kuppelsteg (41) miteinander verbunden sind.

7. Brille nach einem der vorgenannten Ansprüche, **dadurch gekennzeichnet, dass** im Brillengestell (1-6) Aufnahmenuten (44) für die Klammern (39) vorgesehen sind.

8. Brille insbesondere nach einem der vorgenannten Ansprüche, **dadurch gekennzeichnet, dass** die Kontur des Brillengestells aus einer ebenen Platte ausgeformt ist.

9. Brille nach Anspruch 8, **dadurch gekennzeichnet, dass** die Platte überall die gleiche Wandstärke aufweist.

10. Brille nach einem der vorgenannten Ansprüche, **dadurch gekennzeichnet, dass** die Vorderseite des Brillengestells (1-6) oder eines Glases (30) eine linienförmige Auflagerfläche für den Endbereich (14) des Brillenbügels (13) und damit einen Teil des Scharniers bildet.
